Europäisches Patentamt

European Patent Office

Office européen des brevets

(19)

(11) Veröffentlichungsnummer : **0 338 365 B1**

# (12) EUROPÄISCHE PATENTSCHRIFT

(45) Veröffentlichungstag der Patentschrift :
**05.08.92 Patentblatt 92/32**

(51) Int. Cl.$^5$ : **A22C 13/00**

(21) Anmeldenummer : **89106283.8**

(22) Anmeldetag : **10.04.89**

(54) **Gekrümmte schlauchförmige Verpackungshülle, insbesondere Wursthülle.**

(30) Priorität : **19.04.88 DE 3813044**

(43) Veröffentlichungstag der Anmeldung :
**25.10.89 Patentblatt 89/43**

(45) Bekanntmachung des Hinweises auf die
Patenterteilung :
**05.08.92 Patentblatt 92/32**

(84) Benannte Vertragsstaaten :
**AT BE CH DE FR GB IT LI NL SE**

(56) Entgegenhaltungen :
**DE-A- 2 324 065**
**DE-C- 2 163 764**
**FR-A- 1 397 501**

(73) Patentinhaber : **HOECHST**
**AKTIENGESELLSCHAFT**
**Postfach 80 03 20**
**W-6230 Frankfurt am Main 80 (DE)**

(72) Erfinder : **Gord, Herbert**
**Ahornweg 5**
**W-6507 Ingelheim (DE)**
Erfinder : **Pho Tu, Hoang**
**Am Kiefernhang 7**
**W-6239 Eppstein (DE)**
Erfinder : **Siebrecht, Manfred, Dr.**
**Buchenweg 10**
**W-6200 Wiesbaden-Naurod (DE)**
Erfinder : **Becker, Reinhold, Dr.**
**Am Hohen Stein 18**
**W-6200 Wiesbaden (DE)**

EP 0 338 365 B1

**Beschreibung**

Die Erfindung bezieht sich auf eine gekrümmte oder ringförmige, vorzugsweise zur Kranzform gebogene oder spiralförmige schlauchförmige Verpackungshülle, insbesondere auf eine künstliche Wursthülle in Form eines sogenannten Kranzdarms, aus verstärkungsfreier Cellulose und auf ein Verfahren zu ihrer Herstellung, bei dem Viskose (Cellulosexanthogenat) in regenerierte Cellulose überführt wird. Der nach dem Trocknen erhaltene schraubenförmig gewundene Schlauch läßt sich in einzelne gebogene oder ringförmige Abschnitte teilen, die bei Verwendung als künstliche Wursthülle mit Wurstbrät gefüllt und weiterverarbeitet werden.

Verpackungshüllen dieser Art sind seit langem bekannt. Ihre Herstellung erfolgt nach dem Viskoseverfahren, bei dem die alkalische Viskoselösung durch eine ringförmige Schlitzdüse direkt in ein saures Koagulationsbad extrudiert wird. Der koagulierte Schlauch wird durch Behandlung mit saurer Regenerierflüssigkeit in Cellulosehydrat-Gel überführt und danach im aufgeblasenen Zustand getrocknet.

Zur Erzeugung der permanent gebogenen Schlauchform nach dem Viskoseverfahren wird der koagulierte und regenerierte Schlauch aus Cellulosehydrat-Gel in aufgeblasenem, spiralförmig aufgewickeltem Zustand getrocknet. So beschreibt bereits die DE-C-667 016 (= US-A-2,136,566) einen Trockenprozeß, bei dem der spiralförmig auf einer beheizten Trommel aufgewickelte, mit Luft aufgeblasene Schlauch in zwei Stufen getrocknet wird. Zunächst wird die mit der Trommel in Berührung stehende Innenseite des Schlauches getrocknet und danach der Schlauch allseitig mit Luft zu Ende getrocknet. Durch die einseitige Trocknung schrumpft die an der Trommel anliegende Innenseite stärker zusammen als die später getrocknete Außenseite. Durch die Verfestigung der Cellulose in der Hitze nimmt der Schlauch die dauerhaft spiralförmige Gestalt an. Dieses Verfahren erfordert einen hohen Bedienungsaufwand und ist nur für diskontinuierlichen Betrieb geeignet. Ein weiterer Nachteil sind die ungünstigen Materialeigenschaften der erhaltenen Schlauchhülle.

In einer Weiterentwicklung wird die spiralförmige Form bereits am koagulierten, noch nicht vollständig regenerierten Schlauch erzeugt. Bei diesem in der DE-C-932 713 (= US-A-2,925,621) beschriebenen Verfahren wird der mit Luft aufgeblasene, koagulierte Schlauch über einen trommelförmigen Träger wendelförmig durch ein Regenerierbad geführt. Der von dem Träger ablaufende regenerierte Celluloseschlauch ist dauerhaft verformt. In der DE-C-1 163 701 (= US-A-3,155,752) wird ein zur Durchführung dieses Verfahrens geeigneter zylindrischer Träger beschrieben. Die in spiralförmiger Wicklung regenerierten Cellulose-Schlauchhüllen sollen nach Angaben der DE-C-932 713 bessere Formbeständigkeit und geringere Kranzdurchmesser gegenüber den nach der DE-C-667 016 hergestellten zeigen, welche ihre Spiralform erst durch die einseitige Schrumpfung beim Trocknen erhalten. Das Verfahren der DE-C-932 713 zeigt aber den Nachteil, daß zur Entfernung der im Schlauch bei der Regenerierung der Cellulose entstehenden Reaktionsgase Produktionsunterbrechungen erforderlich sind. Die erhaltenen Schlauchhüllen zeigen stark schwankende Eigenschaften, insbesondere hinsichtlich Platzdruck, Kaliber (Hüllendurchmesser), Kranzdurchmesser, Dehnverhalten und Festigkeitswerte. Die Festigkeitswerte der Hülle sind außerdem unzureichend. Sie lassen es nicht zu, die Hüllen im gewässerten Zustand mit einem Metallclip zu versehen. Um eine Beschädigung dieser Hüllen beim Abbinden zu vermeiden, ist eine Spezialschnur erforderlich. Bei Verwendung als Wursthülle für Brühwurst kommt es schon nach kurzer Lagerzeit zu unerwünschter Faltenbildung und Geleeabsatz. Faltige Wursthüllen wirken nicht nur unschön, die faltigen Stellen behindern auch das Eindringen von Rauch beim Räuchern der Wurst.

Es ist ferner Stand der Technik, gebogene Würste mit Schlauchhüllen aus thermoplastischem Kunststoff herzustellen. So wird nach der DE-C-21 63 764 (= US-A-3,950,469) der geschmolzene Kunststoff (Polyäthylenterephthalat) durch eine Ringdüse mit exzentrisch ausgebildetem Kreisringspalt zu einem Schlauch extrudiert, der entsprechend der Form des Ringspaltes über den Umfang eine ungleichmäßige Dicke aufweist. Der extrudierte Schlauch wird biaxial gestreckt und anschließend monoaxial in Längsrichtung nachverstreckt. Der erhaltene Kunststoffschlauch ist noch nicht gekrümmt. Erst beim Einpressen von Wurstmasse soll der gerade Kunststoffschlauch durch die Wirkung des Fülldrucks in eine gebogene Form übergehen. Die dünnwandige Schlauchhälfte wird radial leichter aufgedehnt als die dickwandige Schlauchhälfte. Dies hat zur Folge, daß der Schlauch vorwiegend im Bereich der dünnwandigen Schlauchhälfte radial aufgedehnt wird, was auf Kosten einer partiellen Längenverkürzung des Schlauches geschieht. Diese Längenverkürzung des dünnwandigen Schlauchteils bewirkt die Krümmung des Schlauches beim Einpressen der Wurstmasse.

Aus der DE-C-23 14 767 (= US-A-4,081,562) ist ein Verfahren zur Herstellung einer gekrümmten Wursthülle aus eßbaren Materialien, insbesondere tierischer Hautfasermasse bekannt geworden. Nach dem Beispiel wird Kollagen durch eine Ringdüse mit außermittig gelagertem Kern extrudiert. Dadurch wird eine über den Umfang ungleichmäßig dicke Schlauchhülle erzeugt, die sich beim Austreten aus der Düse aufgrund der ungleichmäßigen Weite des Düsenspalts krümmt. Sie wird dann mit Blasluft gefüllt, in gleichmäßigen Windungen schraubenförmig abgeführt und getrocknet, wobei allerdings die dickeren Bereiche stets der stärksten Dehnung ausgesetzt sind. Wursthüllen aus diesem Material sind für eine Reihe von Wursttypen wegen der fehlenden Transparenz nicht geeignet. Außerdem müssen diese Hüllen zur Erhöhung ihrer Festigkeit in Kochsalzlösungen gewässert werden. Dies führt zur Belastung des Abwassers und zur Korrosion der Verarbeitungsmaschinen.

Ausgehend von dem aufgezeigten Stand der Technik besteht die Aufgabe der vorliegenden Erfindung darin, die bekannten gekrümmten oder kranzförmigen verstärkungsfreien Celluloseschlauchhüllen hinsichtlich ihrer Eigenschaften zu verbessern. Sie sollen erhöhte und gleichmäßigere Werte für Dehnung, Platzdruck und Festigkeit sowie gleichmäßige Kaliber und Kranzdurchmesser aufweisen. Ihre Festigkeit soll soweit erhöht sein, daß die Möglichkeit besteht, die Hülle in voll gewässertem Zustand mit einem Metallclip zu verschließen.

Überraschenderweise wird diese Aufgabe gelöst durch eine gekrümmte oder ringförmige schlauchförmige Verpackungshülle, welche die Merkmale des Anspruchs 1 aufweist, sowie durch das in Anspruch 5 angegebene Verfahren zu ihrer Herstellung.

Die Hülle ist sichelförmig gekrümmt, vorzugsweise ringförmig, d.h. zur Kranzform, gebogen. Sie kann auch aus mehr als einem Ring bestehen und ist dann spiralförmig. Sie besteht aus verstärkungsfreier Cellulose. Hierunter ist eine Folie aus regenerierter Cellulose oder Cellulosehydrat zu verstehen, die keine Faserverstärkung enthält und folglich transparent oder zumindest durchscheinend ist. Die Transparenz der Hülle ist auf der äußeren Umfangshälfte, durch deren Mitte sich der größere äußere Krümmungsradius in Schlauchlängsrichtung erstreckt, besonders hoch und besser als bei den herkömmlichen gekrümmten Hüllen aus Cellulose. Die Hülle erscheint in diesem Bereich glasklar und läßt das Füllgut in aller Deutlichkeit erkennen. Es ist jedoch auch möglich, die Folie gegebenenfalls anzufärben. Sie enthält dann Farbpigmente in der Celluloseschicht oder ist mit einem Muster bedruckt. Die Celluloseschicht enthält in üblicher Menge einen für Cellulose bekannten Weichmacher, insbesondere ein Polyol wie Glycerin, und hat einen Wassergehalt von mindestens 5 Gew.-%.

Bei Verwendung als Wursthülle weist sie gegebenenfalls auf ihrer Innen- und/oder Außenseite die bei Wursthüllen aus Cellulose üblichen Beschichtungen auf, z.B. eine innere Beschichtung zur Verbesserung der Haftung zwischen Wurstmasse und der Innenwand der Wursthülle oder einen inneren oder äußeren Überzug aus einem Vinylidenchlorid-Copolymer (PVDC), der als Sperrschicht gegenüber Wasserdampf und Sauerstoff dient, so daß die Wurst nicht austrocknen kann und eine Veränderung der Wurstmasse durch Sauerstoffzutritt verhindert wird, oder eine äußere Schicht, die ein Konservierungsmittel wie Sorbinsäure enthält.

Die Celluloseschicht der gebogenen, schlauchförmigen Verpackungshülle hat im Schnitt quer zur Längsachse verschiedene Wandstärken. Diese Wandstärkenverhältnisse bleiben über die Schlauchlänge praktisch konstant. Der maximale Bereich der Wandstärke liegt im Bereich ihres kleineren, inneren Krümmungsradius. Der minimale Bereich der Wandstärke liegt dem maximalen Bereich der Wandstärke diametral gegenüber und damit im Bereich des größeren äußeren Krümmungsradius. Die Wandstärke verändert sich zwischen dem äußeren und inneren Krümmungsradius, so daß sich ein allmählicher Übergang ergibt. Ein kontinuierlicher Übergang von einem maximalen Wert zu einem minimalen Wert der Wandstärke und umgekehrt ist nicht wesentlich. Es ist auch möglich, die maximale und/oder minimale Wandstärke über einen Teilbereich des Umfangs mehr oder weniger konstant zu halten, z.B. die maximale Wandstärke im Bereich des inneren Krümmungsradius über 25 bis 40 % des Schlauchumfangs.

Die Wandstärke erreicht am inneren Krümmungsradius 50 bis 160, vorzugsweise 90 bis 145 Mikrometer, das Minimum der Wandstärke liegt am äußeren Krümmungsradius und zeigt Werte im Bereich von 10 bis 50, vorzugsweise 20 bis 40 Mikrometer. Die Dickenwerte gelten für einen Wassergehalt von etwa 7 bis 15 Gew.-% und einen Glyceringehalt von 17 bis 25 Gew.-%, bezogen auf das Gesamtgewicht der Hülle. Anstelle des Glycerins kann auch ein anderer oder ein zusätzlicher Weichmacher vorhanden sein. Für einen höheren bzw. niedrigeren Gehalt an Wasser und Weichmacher sind die genannten Werte für die Hüllendicke entsprechend zu vergrößern bzw. zu verringern.

Es ist für die Lösung der obengenannten Aufgabe wesentlich, daß sich die Wandstärke am äußeren und inneren Krümmungsradius möglichst stark unterscheidet. Es ist deshalb erforderlich, daß die maximale Wandstärke am inneren Krümmungsradius die geringste Wandstärke am äußeren Krümmungsradius um mindestens 50 % übersteigt und vorzugsweise mindestens doppelt so dick ist. Optimale Eigenschaften zeigt die Hülle, wenn das Verfahren so ausgeführt wird, daß die Wandstärke im Maximum mindestens dreimal so dick wie im Minimum ist, d.h. das Minimum um 200 % übersteigt. Bei einem Wandstärkenverhältnis von größer als 1 : 9 besteht die Gefahr, daß die Schlauchhülle am äußeren Krümmungsradius zu dünn ist und beim Trocknen platzt und/oder am inneren Krümmungsradius eine zu große Dicke aufweist, worunter die Verarbeitungseigenschaften und die Transparenz der Hülle leidet. Das übliche Wandstärkenverhältnis liegt bei maximal 1 : 5. Die maximale Wandstärke ist dann um 400 % größer als die minimale Wandstärke.

Bei Verwendung als künstliche Wursthülle, insbesondere als sogenannter Kranzdarm, zeigt die Schlauchhülle den für diese Würste üblichen Schlauchdurchmesser, insbesondere von 30 bis 60 mm. Es ist aber auch möglich, wesentlich geringere oder größere Durchmesser zu erreichen, z.B. bis zu 20 mm zur Verwendung der Hülle als gekrümmten Schäldarm oder bis zu 80 mm für großkalibrige Wurstsorten.

Das Flächengewicht der Verpackungshülle, welches ein Maß für die durchschnittliche Wandstärke ist, be-

EP 0 338 365 B1

trägt gewöhnlich 80 bis 140, insbesondere 90 bis 130 g/m². Es wird bestimmt bei einem Wassergehalt von 7 bis 15 Gew.-% und einem Glyceringehalt von 17 bis 25 Gew.-%, jeweils bezogen auf das Gesamtgewicht der Verpackungshülle. Die Verpackungshülle wird zweckmäßigerweise mit den genannten Werten für den Wassergehalt und Weichmachergehalt in den Handel gebracht. Es ist aber auch möglich, die Hülle mit einem deutlich höheren Wassergehalt in den Handel zu bringen, so daß der Verarbeiter die Hülle vor dem Füllvorgang nicht mehr befeuchten muß. Solche Hüllen besitzen gewöhnlich einen Feuchtigkeitsgehalt von 15 bis 28 Gew.-%, bezogen auf das Gesamtgewicht der Hülle.

Die Verpackungshülle läßt sich aufgrund der Wanddickenunterschiede am inneren und äußeren Krümmungsradius in relativ kleiner Kranzform herstellen. Während bisher bekannte zur Kranzform gebogene Cellulosehüllen mit einem Schlauchdurchmesser von 30 bis 60 mm im gewässerten Zustand einen Kranzinnendurchmesser von größer als 170, insbesondere 180 bis 220 mm aufweisen, zeigen die kranzförmigen Verpackungshüllen der Erfindung im gewässerten Zustand mit gleichem Schlauchdurchmesser bis auf 140, insbesondere bis auf 120 mm verringerte Kranzinnendurchmesser. Bei geringerem Schlauchdurchmesser können sogar noch kleinere Kranzinnendurchmesser erreicht werden. Unter gewässertem Zustand versteht man einen Schlauch, der etwa 5 bis 15 min. in einem 20 bis 40°C warmen Wasserbad vollständig eingetaucht war.

Selbstverständlich können die Verpackungshüllen auch übliche Kranzinnendurchmesser aufweisen, wobei sie dann gegenüber den bekannten Hüllen noch wesentlich günstigere Dehneigenschaften aufweisen. Da die Verpackungshülle sehr gleichmäßig gekrümmt ist, ist die Kranzform kreisförmig und der Kranzinnendurchmesser praktisch konstant. Er kann deshalb an jeder beliebigen Stelle gemessen werden.

Selbst bei relativ kleinem Kranzinnendurchmesser zeigt die Verpackungshülle an der inneren Biegung, d.h. im Bereich des Schlauchumfangs mit der größeren Wandstärke, im aufgeblasenen bzw. gefüllten Zustand praktisch keine Querfalten, so daß eine gleichmäßige Durchdringung der Hülle bei der Räucherung der Wurst gewährleistet ist. Die Hülle läßt sich überraschenderweise mit einem Metallclip verschließen und hat eine stark verringerte Platzneigung. Der unter gleichen Bedingungen gemessene Platzdruck ist trotz der relativ geringen Wandstärke am äußeren Krümmungsradius um mindestens 10 %, insbesondere um mindestens 15 % größer als bei einer handelsüblichen gekrümmten Schlauchhülle aus verstärkungsfreier Cellulose.

Beim Einpressen von pastösem Füllgut, insbesondere Wurstmasse, dehnt sie sich im Vergleich mit Kranzdarm aus üblicher verstärkungsfreier Cellulose wesentlich weniger auf und zeigt hohe Kaliberkonstanz. Beim Einpressen der Wurstmasse auf modernen Füllmaschinen bleibt das eingestellte Füllkaliber, im Gegensatz zu den bekannten Cellulosehüllen, praktisch unverändert, auch wenn der Fülldruck den üblichen Schwankungen unterliegt. Dieses Druckdehnungsverhalten läßt sich beschreiben durch das Verhältnis des Durchmessers der mit einem Druck von 10 kPa aufgeblasenen Hülle zum Durchmesser der mit einem Druck von 30 kPa aufgeblasenen Hülle. Dieses Aufdehnungsverhältnis liegt bei Werten zwischen 1 : 1,02 bis 1 : 1,12. Daraus erkennt man, daß der Hüllendurchmesser bei geringen Druckänderungen praktisch konstant bleibt. Wird beispielsweise in eine Wursthülle der Erfindung zum Erreichen eines Füllkalibers von 50 bis 52 mm Wurstmasse mit einem Druck von 20 kPa eingepreßt, so ergibt sich bei einer Änderung des Fülldrucks um 5 kPa eine Kaliberänderung von 0,5 bis 0,7 mm, während unter gleichen Füllbedingungen bei herkömmlichen kranzförmigen verstärkungsfreien Cellulosehüllen eine Abweichung von 1,6 bis 2,2 mm entsteht.

Die Herstellung der Verpackungshülle erfolgt nach dem Viskoseverfahren. Hierbei wird die alkalische Viskoselösung durch eine Ringdüse in ein Bad mit saurer Koagulationsflüssigkeit ausgepreßt. Um der kreisringförmig extrudierten Viskose über ihren Umfang eine dem schlauchförmigen Endprodukt entsprechende Wandstärkenverteilung zu verleihen, besitzt die Ringdüse einen entsprechenden Austrittsquerschnitt in Form eines exzentrischen Kreisringspalts. Der Bereich mit der größten Wanddicke liegt dem Bereich mit der geringsten Wanddicke diametral gegenüber. Der Kreisringspalt hat beispielsweise eine maximale Öffnungsbreite von 0,8 bis 1,4 mm und eine minimale Öffnungsbreite von 0,4 bis 1,0 mm. Es ist auch möglich, einen zentrischen Kreisringspalt zu verwenden, wenn dafür gesorgt wird, daß die Viskose im Kreisringspalt - entsprechend der vorgesehenen extrudierten Wandstärke - verschieden große Strömungsgeschwindigkeiten aufweist. Unter diesen Verfahrensbedingungen erhält die kreisringförmig aus dem Kreisringspalt austretende Viskoselösung auf der einen Umfangshälfte eine minimale Wandstärke und diametral gegenüber auf der anderen Umfangshälfte eine maximale Wandstärke.

Die extrudierte Viskoselösung tritt unmittelbar nach Austritt aus dem Kreisringspalt mit der Koagulationsflüssigkeit in Kontakt. Der schlauchförmige, koagulierte Körper wird in üblicher Weise senkrecht nach unten, vorzugsweise aber senkrecht nach oben, durch das Koagulationsbad geführt. Die Viskose trifft kurz nach Verlassen des Kreisringspalts auf die äußere Oberfläche eines kreiszylindrischen Rohres, eines sogenannten Ausbreiters, der den koagulierenden Viskoseschlauch in einem kreisförmigen Querschnitt hält und von innen abstützt. Zwischen der äußeren Oberfläche dieses Rohres und der extrudierten Viskose befindet sich ein Film aus Koagulationsflüssigkeit, der die Viskoseschicht von innen zur Koagulation bringt.

4

Danach läßt man saure Regenerierflüssigkeit auf den koagulierten Schlauch einwirken. Hierzu durchläuft der Schlauch zweckmäßigerweise entsprechende Bäder, bis die Viskose vollständig in Cellulose (Cellulosehydrat-Gel) überführt ist. Im Gegensatz zum Stand der Technik erfolgt in dieser Stufe noch keine spiralförmige Verformung der Schlauchhülle.

Es ist besonders vorteilhaft, die Koagulation und Regenerierung beschleunigt durchzuführen. Dies geschieht beispielsweise durch Erhöhung der Säurekonzentration und/oder der Temperatur der Koagulations- und Regenerierflüssigkeit. Eine weitere Maßnahme ist die Zugabe von Hydroxycarbonsäure zu diesen Flüssigkeiten, wie es in der DE-A-34 16 406 beschrieben ist. Während dieser Behandlungsstufen läßt man einen Längs- und Querschrumpf des Schlauches zu. In bevorzugter Ausführungsform läßt man den Schlauch während der Koagulations- und Regenerierstufe um 5 bis 20, insbesondere 7 bis 15 % in Längsrichtung und um 20 bis 50, insbesondere 25 bis 45 % in Querrichtung schrumpfen, im Vergleich zu den Dimensionen bei der schlauchförmigen Extrusion der Viskose. Auf diese Weise zeigt die erhaltene Kranzform besonders kleine Innendurchmesser.

Nach der Regenerierung wird der Schlauch wie üblich gewaschen, von Säure und Salzen befreit und einer Weichmacherbehandlung unterzogen.

Der erhaltene Schlauch aus Cellulosehydrat-Gel hat noch einen sehr hohen Wassergehalt und weiche Struktur. Im abschließenden Trockenprozeß wird unter dem Einfluß von Wärme das Wasser weitgehend entfernt, vorzugsweise auf Werte unter 10 Gew.-%, und die Cellulosestruktur verfestigt. Die zur Trocknung erforderliche Wärmezufuhr erfolgt zweckmäßigerweise mit Heißluft von 80 bis 140°C.

Es ist erfindungswesentlich, daß der koagulierte und regenerierte Schlauch aus Cellulosehydrat-Gel, der bereits aufgrund der verschiedenen Wandstärke der schlauchförmig extrudierten Viskose eine ungleichmäßige Wandstärke hat, bei der Trocknung im Bereich seiner dünneren Wandstärke eine Streckung in Längs- und Querrichtung erfährt, durch die eine zusätzliche Verringerung der Wandstärke des Schlauches eintritt, und im Bereich seiner dickeren Wandstärke einen Schrumpf in Längsrichtung und eine Streckung in Querrichtung erfährt. Das Ausmaß der Streckung in Querrichtung beim Trocknen ist über den Schlauchumfang vorzugsweise etwa gleich groß, so daß der resultierende Schlauch einen weitgehend kreisförmigen Querschnitt aufweist.

Somit wird die Dickenverringerung praktisch nur im Bereich der dünneren Wandstärke vorgenommen. Hierzu muß der Schlauch in diesem Bereich besonders stark in Längsrichtung gedehnt werden. Der Schlauch aus Cellulosehydrat-Gel wird deshalb spiralförmig auf einen Träger gewickelt, wobei darauf zu achten ist, daß der Bereich der dünneren Schlauchwand im Bereich der äußeren Schlauchwindung vorhanden ist, d.h. sich im Bereich des größeren äußeren Krümmungsradius erstreckt, während der Bereich der dickeren Schlauchwand mit dem Träger in Kontakt tritt, d.h. im Bereich des kleineren, inneren Krümmungsradius verläuft. Der Bereich der äußeren Schlauchwindung entspricht dem größeren äußeren Krümmungsradius, der Bereich der Schlauchwindung, die mit dem Träger in Kontakt tritt, entspricht dem kleineren inneren Krümmungsradius der fertiggestellten gekrümmten Schlauchhülle.

Für die geforderten Eigenschaften der Schlauchhülle ist es von Vorteil, wenn sie bei der Trocknung am inneren Krümmungsradius einen Längsschrumpf vorzugsweise um 10 bis 30, insbesondere 15 bis 27 %, bezogen auf die Schlauchlänge vor dem Trocknen, erfährt. Dieser Längsschrumpf führt dazu, daß der fertiggestellte gebogene Schlauch einen besonders kleinen Kranzinnendurchmesser erhält. Der Längsschrumpf zeigt sich in einer im Bereich des inneren Krümmungsradius vorhandenen Schlauchorientierung in Querrichtung. Dagegen weist der Schlauch im Bereich des äußeren Krümmungsradius weiterhin eine stärkere Orientierung in Längsrichtung auf. Dies ist eine Folge der Längsdehnung am äußeren Krümmungsradius beim Trocknen, die vorzugsweise 10 bis 40, insbesondere 20 bis 35 %, bezogen auf die Schlauchlänge vor dem Trocknen, beträgt.

Der Schlauch ist während des Trocknens mit einem Gas, insbesondere Luft, aufgeblasen. Durch einen entsprechend hohen Innendruck erfolgt am dünneren Außenumfang des spiralförmig gewickelten Schlauches eine Längsdehnung, wodurch die Dicke der Schlauchwand in diesem Bereich noch weiter verringert wird. Diese Maßnahme steht im Gegensatz zu der Lehre der eingangs erörterten DE-C-23 14 767, wonach die dickeren Bereiche eines Kollagen-Schlauches der stärksten Dehnung ausgesetzt werden. Über den gesamten Schlauchumfang erfolgt zweckmäßigerweise eine weitgehend gleichmäßige Querdehnung, wodurch der Schlauch einen annähernd kreisförmigen Querschnitt erhält.

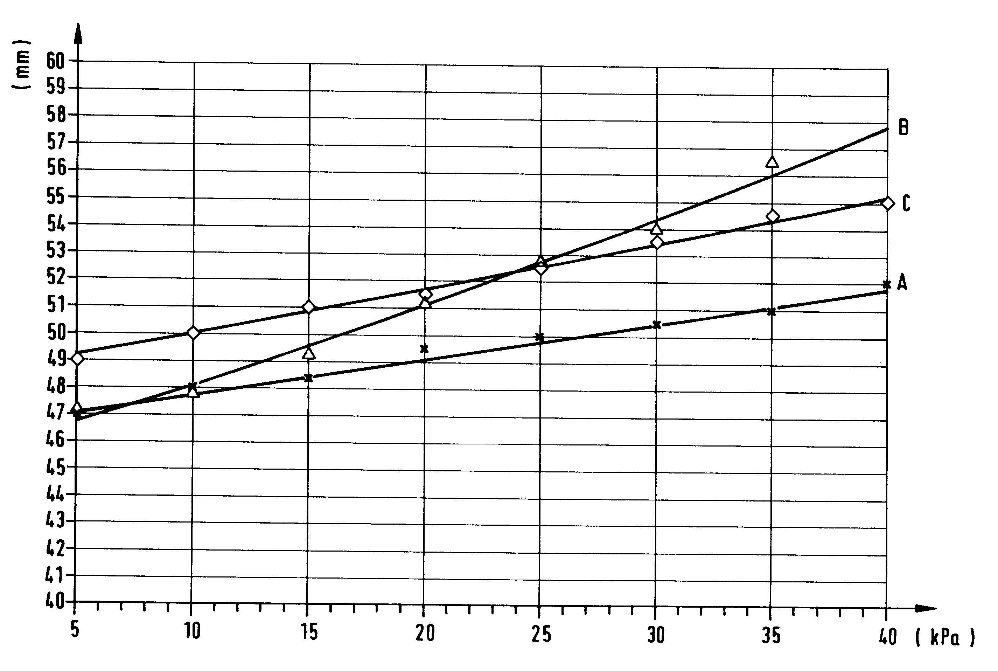

Zur spiralförmigen Führung des Schlauchs durch den Trockner ist beispielsweise die aus der DE-B-23 22 220 (Fig. 1) bekannte Walzenanordnung geeignet, die aus achsparallelen Stäben besteht. Diese Stäbe werden angetrieben und drehen sich um sich selbst. Weiterhin umfaßt die bekannte Anordnung noch wendelförmig angeordnete Stäbe, die sich radial erstrecken.

Zur schraubenförmigen Führung des Schlauchs ist auch eine schraubenförmige Rollenbahn geeignet, wie sie in der DE-C-650 526 beschrieben wird. Sie besteht aus Führungsrollen, die hintereinander in entsprechenden Lagen um eine zentrale Antriebswelle in konzentrischen Windungen angeordnet sind. Sie transportieren den Schlauch entsprechend ihrer Anordnung. Der Antrieb der Führungsrollen erfolgt über die Zentralwelle, wobei die Drehgeschwindigkeit der Führungsrollen die Transportgeschwindigkeit des fortbewegten Schlauches bestimmt. Der Transport des Schlauches wird unterstützt durch zusätzliche, schräg zur Schraubenachse angeordnete, seitlich abstehende Stützrollen, welche frei drehbar sind.

Eine weitere geeignete Vorrichtung zum spiralförmigen Transport des Schlauchs durch den Trockner ist Gegenstand der DE-C-37 20 034. Diese Vorrichtung umfaßt ein längsaxial verschiebbares und um die eigene Achse rotierbares zylinderförmiges Trägerelement. Es besteht aus einer Vielzahl von zylinderförmigen Einzelsegmenten, die miteinander ein umlaufendes, durchgehendes Endlosrohr bilden, welches eine durchgehende, lückenlose Auflagefläche für den Schlauch darstellt.

Während der Trocknung ist der Schlauch aus Cellulosehydrat-Gel auf einen bestimmten Innendruck aufgeblasen. Vor und nach der Trocknung durchläuft der Schlauch Quetschwalzenpaare, die das Austreten des Stützgases verhindern. Der Innendruck muß so gewählt werden, daß der (drucklos gemessene) Durchmesser des getrockneten Schlauches um mindestens 20, insbesondere mindestens 40 % größer ist als der (drucklos gemessene) Durchmesser vor Beginn der Trocknung. Eine Durchmesservergrößerung um mehr als 60 % scheitert gewöhnlich an der geringeren Festigkeit des Schlauchs im Bereich seiner minimalen Wandstärke. Bei Überschreiten eines bestimmten Innendrucks nimmt die Platzneigung des Schlauchs beim Trocknen stark zu. Je höher andererseits dieser Innendruck ist, desto kleiner ist der erzielte Kranzinnendurchmesser. Die durch den erhöhten Innendruck und die geringere Wandstärke erreichte Längs- und Querdehnung am äußeren Umfang der Schlauchspirale führt zu einer plastischen, dauerhaften Materialverformung. Infolgedessen bleibt die im Trocknungsprozeß erzeugte Spiralform des Schlauches auch nach Beendigung der Trocknung erhalten. Der Kranzinnendurchmesser des getrockneten Schlauches vergrößert sich allerdings beim Wässern der Hülle, da die Cellulose infolge Wasseraufnahme ihr Dehnungsverhalten verändert.

Durch die Verstreckung der Hülle beim Trocknen im Bereich ihrer minimalen Dicke über den elastischen Bereich hinaus bis zur plastischen permanenten Verformung wird eine Hülle erhalten, die gegenüber den herkömmlichen gebogenen Cellulosehüllen verbesserte physikalische Eigenschaften aufweist. Das vorgesehene Füllkaliber wird bereits bei wesentlich niedrigerem Fülldruck erreicht und ist sehr gleichmäßig. Auch bleibt die Kranzform nach dem Einpressen der Wurstmasse erhalten, die Schlauchhülle zeigt auch dann noch eine sehr gleichmäßig gebogene, kreisringförmige Gestalt. Deshalb lassen sich diese Hüllen besonders prall mit pastösem Füllgut, insbesondere Wurstmasse, füllen. Die erhaltenen Würste sind faltenfrei, lassen sich gleichmäßig räuchern und zeigen keinen Geleeabsatz. Außerdem zeigt die Hülle überraschenderweise einen erhöhten Platzdruck, obwohl sie einen Bereich mit einer deutlich verringerten Wandstärke aufweist.

Die gekrümmte Schlauchhülle kann als einzelner Abschnitt oder in Form eines gerafften Hohlstabes eingesetzt werden. Zum Raffen der Hülle ist eine vorhergehende Befeuchtung auf einen Wassergehalt von etwa 13 bis 23 Gew.-%, bezogen auf das Gesamtgewicht, erforderlich. Es ist auch möglich, die Schlauchhülle in flachgelegtem Zustand zu einem Wickel aufgerollt in den Handel zu bringen. In der flachgelegten Schlauchhülle erstrecken sich die Schlauchbereiche mit der minimalen und maximalen Wandstärke übereinanderliegend in der Mitte der Schlauchbreite, wobei die Schlauchbreite dem halben Schlauchumfang entspricht. Die Mitte der Schlauchbreite liegt von den beiden Faltkanten des flachgelegten Schlauches etwa gleich weit entfernt. Auf der Schlauchumfangshälfte des flachgelegten Schlauches, wo sich in der Mitte die minimale Wandstärke erstreckt, befinden sich quer verlaufende Falten, die beim Füllen des Schlauches verschwinden.

Das Dehnverhalten der erfindungsgemäßen Schlauchhülle wird anhand des nachfolgenden Ausführungsbeispiels erläutert.

Die untersuchte Schlauchhülle zeigt am äußeren Krümmungsradius eine minimale Wandstärke von etwa 26 bis 28 Mikrometer und am inneren Krümmungsradius eine maximale Wandstärke von 128 bis 130 Mikrometer. Im flachgelegten Zustand zeigt die Hülle auf der einen Umfangshälfte, in deren Mitte sich der äußere Krümmungsradius erstreckt, quer verlaufende Falten, die beim Aufblasen oder Füllen der Hülle verschwinden. Wird die gewässerte Schlauchhülle mit einem Druck von 20 kPa mit Luft aufgeblasen oder im gewässerten Zustand mit Füllgut gefüllt, so ist sie kreisförmig gebogen, der Kranzinnendurchmesser beträgt etwa 160 bis 170 mm. Ihr Flächengewicht beträgt 100 g/m². Sie wurde hergestellt nach dem in den Ansprüchen 5 bis 8 beschriebenen Verfahren.

Während der Koagulation und Regenerierung betrug der Schrumpf in Längsrichtung 11 %, in Querrichtung 28 %. Die Umfangsdehnung des getrockneten Schlauchs betrug 45 % im Vergleich zum Schlauchumfang unmittelbar vor dem Trocknen. Während des Trocknens schrumpfte der Schlauch im Bereich des inneren Krümmungsradius in Längsrichtung um etwa 20 %, während er im Bereich des äußeren Krümmungsradius in Längsrichtung um 30 % gedehnt wurde. Die Hülle zeigt am äußeren Krümmungsradius eine stärkere Orientierung in Längsrichtung, am inneren Krümmungsradius dagegen eine stärkere Orientierung in Querrichtung. Die Orientierung wurde festgestellt durch Messung der Doppelbrechung. Der Kranzinnendurchmesser des getrockneten Schlauches betrug 135 mm (aufgeblasen mit Luft, Druck 20 kPa).

Zur Bestimmung des Dehnverhaltens wird die Hülle vor der Druckbeaufschlagung ca. 10 min. in etwa 30°C warmen Wasser gewässert. Der Kranzinnendurchmesser der gewässerten Hülle vergrößerte sich auf 175 mm (aufgeblasen mit Luft, Druck 20 kPa). Die Vergrößerung des Kalibers, ausgehend von etwa 47 mm, durch Erhöhung des Hülleninnendrucks mittels Druckluft ist im Diagramm dargestellt (Kurve A). Im Diagramm ist der Hülleninnendruck (Abszisse) in der Dimension kPa gegen das Kaliber (Ordinate) in der Dimension Millimeter aufgetragen.

Zum Vergleich wird das Dehnverhalten eines Kranzdarms aus dem gleichen Material und mit gleichem Kaliber untersucht, der seine gebogene Form bei der Regenerierung der Cellulose entsprechend der DE-C-932 713 erhalten hatte (Diagramm Kurve B). Seine Wandstärke beträgt am äußeren Krümmungsradius etwa 55 bis 58 Mikrometer, am inneren Krümmungsradius etwa 60 bis 62 Mikrometer. Diese vorbeschriebene Hülle zeigt im Gegensatz zur erfindungsgemäßen Hülle am inneren Krümmungsradius eine geringe Orientierung in Längsrichtung.

Sofern die Schlauchhülle der Erfindung bei gleichem Fülldruck das gleiche Füllkaliber wie die vorbeschriebene Schlauchhülle erreichen soll, muß sie vor dem Füllen ein größeres Kaliber besitzen als die vorbeschriebene Schlauchhülle. Im Diagramm ist das Dehnungsverhalten einer erfindungsgemäßen Hülle dargestellt (Kurve C), die - ausgehend von einem Kaliber von etwa 49 mm (im gewässerten Zustand) - bei einem Innendruck von etwa 24 kPa das Füllkaliber der vorbeschriebenen Hülle erreicht (Kurve B).

Aus dem Diagramm (Kurve A und C) ergibt sich, daß die erfindungsgemäße Schlauchhülle einen wesentlich langsameren Anstieg des Kalibers (geringere Dehnung) bei gleicher Fülldruckänderung zeigt als die vorbeschriebene Hülle (Kurve B). Bei der erfindungsgemäßen Hülle beeinflussen geringe Schwankungen des Fülldrucks somit kaum das Füllkaliber der hergestellten Wurst, während bei der vorbeschriebenen Hülle ein konstanter Fülldruck erforderlich ist, um eine hohe Kaliberkonstanz zu erreichen.

**Patentansprüche**

1. Gekrümmte oder ringförmige, vorzugsweise zur Kranzform gebogene oder spiralförmige, schlauchförmige Verpackungshülle, insbesondere künstliche Wursthülle, aus verstärkungsfreier Cellulose, dadurch gekennzeichnet, daß die gekrümmte Verpackungshülle über dem Schlauchumfang verschiedene Wandstärken aufweist, wobei der Bereich des Schlauchumfangs mit der größeren Wandstärke dem Bereich des Schlauchumfangs mit der geringeren Wandstärke gegenüberliegt, daß sich der Bereich mit der größeren Wandstärke im Bereich des kleineren, inneren Krümmungsradius und der Bereich mit der kleineren Wandstärke im Bereich des größeren, äußeren Krümmungsradius befindet, daß das Maximum der Wandstärke im Bereich von 50 bis 160, insbesondere 90 bis 145 Mikrometer und das Minimum der Wandstärke im Bereich von 10 bis 50, insbesondere 20 bis 40 Mikrometer liegt (gemessen bei einem Wassergehalt von 7 bis 15 Gew.-% und einem Glyceringehalt von 17 bis 25 Gew.-%, bezogen jeweils auf das Gesamtgewicht), und daß das Maximum der Wandstärke um mindestens 50 %, vorzugsweise um 200 bis 800 % größer ist als das Minimum der Wandstärke.

2. Verpackungshülle nach Anspruch 1, dadurch gekennzeichnet, daß sie einen Schlauchdurchmesser von 20 bis 80, insbesondere 30 bis 60 Millimeter aufweist.

3. Verpackungshülle nach Anspruch 2, dadurch gekennzeichnet, daß sie zur Kranzform gebogen ist und daß der Kranzinnendurchmesser der gewässerten, mit 20 kPa aufgeblasenen, gebogenen Verpackungshülle gleich/kleiner als 220 mm, vorzugsweise gleich/kleiner als 180, insbesondere gleich/kleiner als 160 mm ist.

4. Verpackungshülle nach einem der Ansprüche 1 bis 3, dadurch gekennzeichnet, daß sie ein Flächengewicht von 80 bis 140, insbesondere 90 bis 130 g/m² aufweist (gemessen bei einem Wassergehalt von 7 bis 15 Gew.-% und einem Glyceringehalt von 17 bis 25 Gew.-%, jeweils bezogen auf das Gesamtgewicht).

5. Verfahren zur Herstellung der Verpackungshülle nach einem der Ansprüche 1 bis 4 nach dem Viskoseverfahren, gekennzeichnet durch die folgenden Schritte
   – Extrusion der alkalischen Viskoselösung in eine saure Koagulationsflüssigkeit unter Bildung eines geradlinig sich erstreckenden Schlauches mit ungleichmäßiger Wandstärke, wobei sich Maximum und Minimum der Wandstärke gegenüberliegen,
   – Regenerierung des Schlauches zu einem geradlinigen Schlauch aus Cellulosehydrat-Gel,
   – Trocknung des spiralförmig geführten, aufgeblasenen Schlauchs aus Cellulosehydrat-Gel unter Dehnung des Schlauchs, insbesondere um 10 bis 40 %, bezogen auf die Schlauchlänge vor dem Trocknen, im Bereich des Minimums der Wandstärke unter weiterer Verringerung der Wandstärke in diesem Bereich.

6. Verfahren nach Anspruch 5, dadurch gekennzeichnet, daß die Koagulation und Regenerierung beschleunigt durchgeführt wird, wobei man einen Schrumpf des Schlauches in Längs- und Querrichtung zuläßt, vorzugsweise einen Längsschrumpf um 5 bis 20 % und einen Querschrumpf von 20 bis 50 % im Vergleich zu den Schlauchdimensionen bei der Extrusion der Viskose.

7. Verfahren nach Anspruch 5 oder 6, dadurch gekennzeichnet, daß man den aufgeblasenen Schlauch beim Trocknen im Bereich des Maximums der Wandstärke in Längsrichtung, vorzugsweise um 10 bis 30 %, bezogen auf seine Länge vor dem Trocknen, schrumpfen läßt.

8. Verfahren nach einem der Ansprüche 5 bis 7, dadurch gekennzeichnet, daß beim Trocknen der Innendruck im aufgeblasenen Schlauch so gewählt wird, daß der (drucklos gemessene) Durchmesser des getrockneten Schlauches um mindestens 20, insbesondere 40 % größer ist als der (drucklos gemessene) Durchmesser vor Beginn der Trocknung.

## Claims

1. A curved or ring-shaped, preferably garland-shaped or spiral, tubular packing casing, in particular an artificial sausage casing, of unreinforced cellulose, wherein the curved packing casing has different wall thicknesses over the tube periphery, the area of the tube periphery with the greater wall thickness lying opposite the area of the tube periphery with the smaller wall thickness, wherein the area with the greater wall thickness is situated in the area of the smaller, inner radius of curvature and the area with the smaller wall thickness is situated in the area of the greater, outer radius of curvature, wherein the maximum of the wall thickness lies in the range from 50 to 160, in particular 90 to 145 micrometers, and the minimum of the wall thickness lies in the range from 10 to 50, in particular 20 to 40 micrometers (measured at a water content of 7 to 15% by weight and a glycerol content of 17 to 25% by weight, in each case based on the total weight), and wherein the maximum of the wall thickness is at least 50%, preferably 200 to 800% greater than the minimum of the wall thickness.

2. The packing casing as claimed in claim 1, which has a tube diameter of 20 to 80, in particular 30 to 60 millimeters.

3. The packing casing as claimed in claim 2, wherein it is curved into a garland shape and wherein the garland inside diameter of the curved packing casing, watered and inflated with 20 kPa, is equal to/smaller than 220 mm, preferably equal to/smaller than 180, in particular equal to/smaller than 160 mm.

4. The packing casing as claimed in one of claims 1 to 3, which has a weight per unit area of 80 to 140, in particular 90 to 130 g/m$^2$ (measured at a water content of 7 to 15% by weight and a glycerol content of 17 to 25% by weight, in each case based on the total weight).

5. A method for the production of the packing casing as claimed in one of claims 1 to 4 by the viscose method, which comprises the following steps
   – extrusion of the alkaline viscose solution into an acid coagulation liquid with formation of a tube extending in a straight line and with a non-uniform wall thickness, with the maximum and minimum of the wall thickness lying opposite each other,
   – regeneration of the tube to give a straight tube of cellulose hydrate gel,
   – drying of the spiralled, inflated tube of cellulose hydrate gel with expansion of the tube, in particular by 10 to 40%, based on the tube length before drying, in the area of the minimum of the wall thickness, with further reduction of the wall thickness in this area.

6. The method as claimed in claim 5, wherein the coagulation and regeneration is carried out more rapidly by permitting a shrinkage of the tube in the longitudinal and transverse direction, preferably a longitudinal shrinkage of 5 to 20% and a transverse shrinkage of 20 to 50% compared to the tube dimensions upon the extrusion of the viscose.

7. The method as claimed in claim 5 or 6, wherein the inflated tube is allowed to shrink upon drying in the area of the maximum of the wall thickness in the longitudinal direction, preferably by 10 to 30 %, based on its length before drying.

8. The method as claimed in one of claims 5 to 7, wherein, upon drying, the internal pressure in the inflated tube is chosen such that the diameter (measured unpressurized) of the dried tube is at least 20, in particular 40% greater than the diameter (measured unpressurized) before the start of drying.

## Revendications

1. Enveloppe d'emballage tubulaire courbe ou annulaire de préférence courbée en forme de guirlande ou de forme spirale, en particulier boyau de saucisse artificiel en cellulose non renforcée, caractérisée en ce que l'enveloppe d'emballage courbe présente, sur le pourtour du tube souple, différentes épaisseurs de paroi, la zone du pourtour du tube de plus grande épaisseur pariétale étant opposée à la zone du pourtour du tube de plus petite épaisseur pariétale, en ce que la zone de plus grande épaisseur pariétale se trouve dans la région du plus petit rayon de courbure interne et en ce que la zone de plus petite épaisseur pariétale se trouve dans la région du plus grand rayon de courbure externe, en ce que le maximum d'épaisseur de la paroi vaut de 50 à 160 µm, en particulier de 90 à 145 µm, et le minimum d'épaisseur de la paroi vaut 10 à 50 µm, en particulier 20 à 40 µm (mesurés pour une teneur en eau de 7 à 15 % en poids et une teneur en glycérol de 17 à 25 % en poids, chaque fois par rapport au poids total), et en ce que le maximum d'épaisseur de la paroi est d'au moins 50 %, de préférence 200 à 800 %, supérieur au minimum de l'épaisseur pariétale.

2. Enveloppe d'emballage selon la revendication 1, caractérisée en ce qu'elle présente un diamètre de tube de 20 à 80 mm, en particulier de 30 à 60 mm.

3. Enveloppe d'emballage selon la revendication 2, caractérisée en ce qu'elle est courbée en une forme de guirlande et que le diamètre interne de la guirlande de l'enveloppe d'emballage courbe gonflée sous 20 kPa, à l'état mouillé, est égal ou inférieur à 220 mm, de préférence égal ou inférieur à 180 mm, en particulier égal ou inférieur à 160 mm.

4. Enveloppe d'emballage selon l'une quelconque des revendications 1 à 3, caractérisée en ce qu'elle présente un poids surfacique de 80 à 140, de préférence 90 à 130, g/m$^2$ (mesuré pour une teneur en eau de 7 à 15 % en poids et une teneur en glycérol de 17 à 25 %. en poids, chaque fois par rapport au poids total).

5. Procédé de fabrication, d'après le procédé à la viscose, de l'enveloppe d'emballage de l'une quelconque des revendications 1 à 4, caractérisé par les étapes suivantes:

– extrusion de la solution alcaline de viscose dans un liquide de coagulation acide, pour former un tube souple de forme linéaire et d'épaisseur de paroi irrégulière, l'épaisseur maximale et l'épaisseur minimale de la paroi se trouvant en des positions opposées,

– régénération du tube en un tube linéaire en gel d'hydrate de cellulose,

– séchage de tube souple hélicoïdal gonflé, en gel d'hydrate de cellulose, avec dilatation dudit tube, en particulier de 10 à 40 %, par rapport à la longeur du tube avant séchage, dans la zone d'épaisseur minimale de la paroi, avec diminution supplémentaire de l'épaisseur pariétale dans cette zone.

6. Procédé selon la revendication 5, caractérisé en ce que la coagulation et la régénération sont réalisées plus rapidement, en tolérant un retrait longitudinal et transversal du tube, de préférence un retrait longitudinal de 5 à 20% et un retrait transversal de 20 à 50%, en comparaison des dimensions de tube obtenu par extrusion de la viscose.

7. Procédé selon la revendication 5 ou 6, caractérisé en ce que l'on laisse le tube gonflé se rétrécir par séchage dans la zone d'épaisseur maximale de la paroi, dans la direction longitudinale, de préférence de 10 à 30% par rapport à sa longueur avant séchage.

8. Procédé selon l'une des revendications 5 à 7, caractérisé en ce que la pression interne dans le tube gonflé au cours du séchage est choisie de telle sorte que le diamètre (mesuré non pressurisé) du tube séché soit d'au moins 20%, en particulier d'au moins 40% plus grand que le diamètre (mesuré non pressurisé) avant début de séchage.

EP 0 338 365 B1